Europäisches Patentamt

European Patent Office

Office européen des brevets

(19)

(11) **EP 1 610 487 A2**

(12) **EUROPEAN PATENT APPLICATION**

(43) Date of publication:
**28.12.2005 Bulletin 2005/52**

(51) Int Cl.7: **H04L 1/06**

(21) Application number: **05013369.3**

(22) Date of filing: **21.06.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **21.06.2004 KR 2004045924**

(71) Applicant: **SAMSUNG ELECTRONICS CO., LTD.**
**Suwon-si, Gyeonggi-do (KR)**

(72) Inventors:
• **Jeong, Hong-Sil**
**Seoul (KR)**
• **Chae, Chang-Byoung**
**Jonro-ku, Seoul 110-062 (KR)**
• **Kim, Jae-Yoel**
**Suwon-si Gyeonggi-do (KR)**
• **Park, Dong-Seek**
**Yongin-si Gyeonggi-do (KR)**

(74) Representative: **Grünecker, Kinkeldey,**
**Stockmair & Schwanhäusser Anwaltssozietät**
**Maximilianstrasse 58**
**80538 München (DE)**

(54) **Apparatus and method for full-diversity, full-rate space-time block coding for even number of transmit antennas**

(57)     A mobile communication system using an STBC scheme having an even number of Tx antennas is provided. In a transmitter having an even number of Tx antennas, a pre-coder pre-codes an input symbol sequence using a pre-coding matrix. The pre-coding matrix is a matrix produced by puncturing a unitary matrix. A space-time coder space-time-encodes the pre-coded symbol sequence received from the pre-coder using a coding matrix.

FIG.5

# EP 1 610 487 A2

**Description**

**PRIORITY**

This application claims priority under 35 U.S.C. § 119 to an application entitled "Apparatus And Method For Full-Diversity, Full-Rate Space-Time Block Coding For Even Number Of Transmit Antennas" filed in the Korean Intellectual Property Office on June 21, 2004 and assigned Serial No. 2004-45924, the contents of which are herein incorporated by reference.

**BACKGROUND OF THE INVENTION**

### 1. Field of the Invention

The present invention relates generally to an apparatus and method for providing transmit antenna diversity in a wireless communication system, and in particular, to an apparatus and method for space-time block coding (STBC) for an even number of transmit (Tx) antennas.

### 2. Description of the Related Art

Generally, in the wireless channel environment of a mobile communication system, unlike that of a wired channel environment, a transmission signal inevitably experiences information loss due to several factors such as multipath interference, shadowing, wave attenuation, time-varying noise, and fading.

The resulting information loss can cause a severe distortion to the actual transmission signal, degrading the entire system performance. In order to reduce the information loss, many error control techniques are usually adopted depending on the characteristics of channels to increase system reliability. One common error control technique is an error correction code method.

Multipath fading is reduced by diversity techniques in the wireless communication system. The diversity techniques are classified into time diversity, frequency diversity, and antenna diversity.

The antenna diversity uses multiple antennas, and is further branched into a receive (Rx) antenna diversity using a plurality of Rx antennas, a Tx antenna diversity using a plurality of Tx antennas, and a multiple-input multiple-output (MIMO) using a plurality of Tx antennas and a plurality of Rx antennas.

The MIMO is a special case of space-time coding (STC) that extends coding that exists in the time domain into the space domain by the transmission of a signal encoded in a predetermined coding method through a plurality of Tx antennas, with the aim to achieve a lower error rate.

V Tarokh, et. al. proposed STBC as one of methods of efficiently applying the antenna diversity scheme (see "Space-Time Block Coding from Orthogonal Designs", IEEE Trans. On Info., Theory, Vol. 45, pp. 1456-1467, July 1999). The Tarokh STBC scheme is an extension of the transmit antenna diversity scheme of S.M. Alamouti (see, "A Simple Transmit Diversity Technique for Wireless Communications", IEEE Journal on Selected Area in Communications, Vol. 16, pp.1451-1458, October 1988), for two or more Tx antennas.

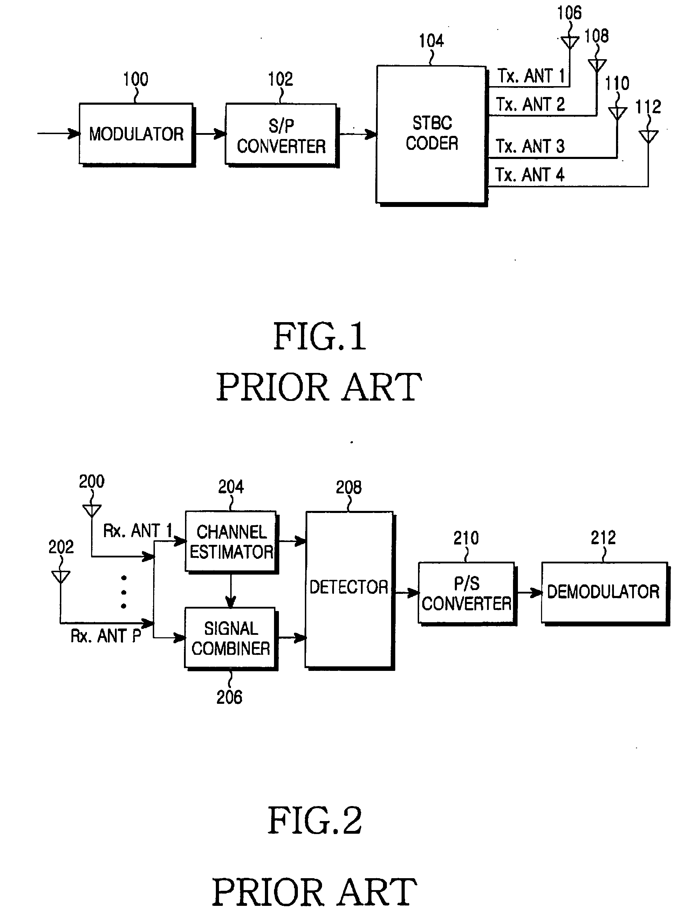

FIG. 1 is a block diagram of a transmitter in a mobile communication system using a conventional STBC. Proposed by Tarokh, the transmitter is comprised of a modulator 100, a serial-to-parallel (S/P) converter 102, an STBC coder 104, and four Tx antennas 106, 108, 110 and 112.

Referring to FIG. 1, the modulator 100 modulates input information data (or coded data) according to a predetermined modulation scheme. The modulation scheme can be one of binary phase shift keying (BPSK), quadrature phase shift keying (QPSK), quadrature amplitude modulation (QAM), and pulse amplitude modulation (PAM).

The S/P converter 102 parallel converts the serial modulation symbols ($s_1$, $s_2$, $s_3$, $s_4$) received from the modulator 100. The STBC coder 104 creates eight symbol combinations by STBC-encoding the four modulation symbols, $s_1$, $s_2$, $s_3$, $s_4$ and sequentially transmits them through the four Tx antennas 106 to 112. A coding matrix used to generate the eight symbol combinations is expressed as

$$G_4 = \begin{bmatrix} s_1 & s_2 & s_3 & s_4 \\ -s_2 & s_1 & -s_4 & s_3 \\ -s_3 & s_4 & s_1 & -s_2 \\ -s_4 & -s_3 & s_2 & s_1 \\ s_1^* & s_2^* & s_3^* & s_4^* \\ -s_2^* & s_1^* & -s_4^* & s_3^* \\ -s_3^* & s_4^* & s_1^* & -s_2^* \\ -s_4^* & -s_3^* & s_2^* & s_1^* \end{bmatrix}$$

$$\ldots \ldots (1)$$

where $G_4$ denotes the coding matrix for symbols transmitted through the four Tx antennas 106 to 112 and $s_1$, $s_2$, $s_3$, $s_4$ denote the four input symbols to be transmitted. The number of the columns of the coding matrix is equal to the number of the Tx antennas and the number of the rows corresponds to the time required to transmit the four symbols. Thus, the four symbols are transmitted through the four Tx antennas over eight time intervals.

For a first time interval, $s_1$ is transmitted through the first Tx antenna 106, $s_2$ through the second Tx antenna 108, $s_3$ through the third Tx antenna 110, and $s_4$ through the fourth Tx antenna 112. In this manner, $-s_4^*$, $-s_3^*$, $s_2^*$, $-s_1^*$ are transmitted through the first to fourth Tx antennas 106 to 112, respectively for an eighth time interval. The STBC coder 104 sequentially provides the symbols of an $i^{th}$ column in the coding matrix to an $i^{th}$ Tx antenna.

As described above, the STBC coder 104 generates the eight symbol sequences using the input four symbols and their conjugates and negatives and transmits them through the four Tx antennas 106 to 112 for eight time intervals. Since the symbol sequences for the respective Tx antennas, that is, the columns of the coding matrix, are mutually orthogonal, a diversity gain as high as a diversity order is achieved.

FIG 2 is a block diagram of a receiver in the mobile communication system using the conventional STBC scheme. The receiver is the counterpart of the transmitter illustrated in FIG. 1.

The receiver is comprised of a plurality of Rx antennas 200 to 202, a channel estimator 204, a signal combiner 206, a detector 208, a parallel-to-serial (P/S) converter 210, and a demodulator 212.

Referring to FIG. 2, the first to $P^{th}$ Rx antennas 200 to 202 provide signals received from the four Tx antennas of the transmitter illustrated in FIG. 1 to the channel estimator 204 and the signal combiner 206.

The channel estimator 204 estimates channel coefficients representing channel gains occurring between the Tx antennas 106 to 112 and the Rx antennas 200 to 202 using the signals received from the first to $P^{th}$ Rx antennas 200 to 202.

The signal combiner 206 combines the signals received from the first to $P^{th}$ Rx antennas 200 to 202 with the channel coefficients.

The detector 208 generates hypothesis symbols by multiplying the combined symbols by the channel coefficients, calculates decision statistics for all of the possible transmitted symbols from the transmitter using the hypothesis symbols, and detects the actual transmitted symbols through threshold detection.

The P/S converter 210 serial converts the parallel symbols received from the detector 208. The demodulator 212 demodulates the serial symbol sequence, thereby recovering the original information bits.

As stated earlier, the Alamouti STBC technique offers the benefit of achieving a diversity order as high as the number of Tx antennas, namely a full diversity order, without sacrificing the data rate by transmitting complex symbols through only two Tx antennas.

The Tarokh STBC scheme extended from the Alamouti STBC scheme achieves a full diversity order using an STBC in the form of a matrix with orthogonal columns, as described with reference to FIGs. 1 and 2. However, because four complex symbols are transmitted for eight time intervals, the Tarokh STBC scheme brings about a decrease in the data rate by 50%. In addition, since it takes eight time intervals to completely transmit one block with four complex symbols, reception performance is degraded due to channel changes within the block over a fast fading channel. In other words, the transmission of complex symbols through four or more Tx antennas requires 2N time intervals for N symbols, causing a longer latency and a decrease in the data rate.

To achieve a full rate in a MIMO system that transmits a complex signal through three or more Tx antennas, the Giannakis group presented a full-diversity, full-rate (FDFR) STBC for four Tx antennas using constellation rotation over a complex field.

This FDFR STBC scheme will be described below.

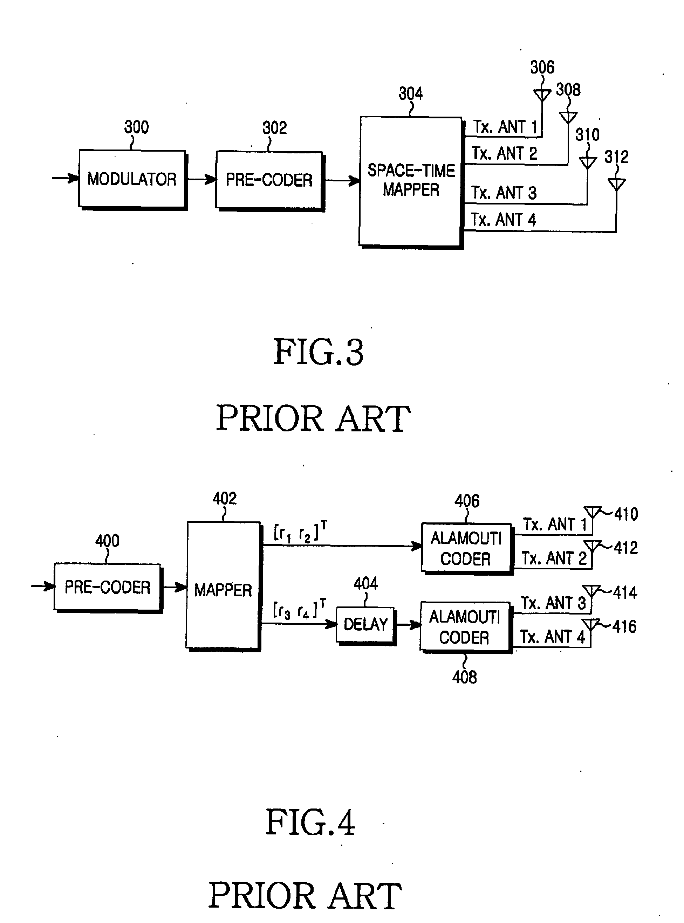

FIG. 3 is a block diagram of a transmitter in a mobile communication system using the conventional Giannakis STBC scheme. As illustrated in FIG. 3, the transmitter includes a modulator 300, a pre-coder 302, a space-time mapper 304, and a plurality of Tx antennas 306, 308, 310 and 312.

Referring to FIG. 3, the modulator 300 modulates input information data (or coded data) according to a predetermined modulation scheme such as BPSK, QPSK, QAM, PAM or PSK.

The pre-coder 302 pre-encodes $N_t$ modulation symbols, $d_1$, $d_2$, $d_3$, $d_4$ received from the modulator 300 such that signal rotation occurs in a signal space, and outputs the resulting $N_t$ symbols. For notational simplicity, four Tx antennas are assumed. Let a sequence of four modulation symbols from the modulator 300 be denoted by d. The pre-coder 302 generates a complex vector r by computing the modulation symbol sequence, d using Equation (2).

$$r = \Theta d = \begin{bmatrix} 1 & \alpha_0^1 & \alpha_0^2 & \alpha_0^3 \\ 1 & \alpha_1^1 & \alpha_1^2 & \alpha_1^3 \\ 1 & \alpha_2^1 & \alpha_2^2 & \alpha_2^3 \\ 1 & \alpha_3^1 & \alpha_3^2 & \alpha_3^3 \end{bmatrix} \begin{bmatrix} d_1 \\ d_2 \\ d_3 \\ d_4 \end{bmatrix} = \begin{bmatrix} r_1 \\ r_2 \\ r_3 \\ r_4 \end{bmatrix}$$

$$\ldots\ldots(2)$$

where $\Theta$ denotes a pre-coding matrix. The Giannakis group uses a Vandermonde unitary matrix as the pre-coding matrix. In the pre-coding matrix, $\alpha_i$ is given as

$$\alpha_i = exp(j2\pi(i + 1/4)/4), \quad i = 0, 1, 2, 3 \tag{3}$$

The Giannakis STBC scheme uses four Tx antennas and is easily extended to more than four Tx antennas. The space-time mapper 304 STBC-encodes the pre-coded symbols in the following method

$$S = \begin{bmatrix} r_1 & 0 & 0 & 0 \\ 0 & r_2 & 0 & 0 \\ 0 & 0 & r_3 & 0 \\ 0 & 0 & 0 & r_4 \end{bmatrix}$$

$$\ldots\ldots(4)$$

where S is a coding matrix for symbols transmitted through the four Tx antennas 306 to 312. The number of the columns of the coding matrix is equal to the number of Tx antennas, and the number of the rows corresponds to the time required to transmit the four symbols. That is, the four symbols are transmitted through the four Tx antennas over four time intervals.

Specifically, for a first time interval, $r_1$ is transmitted through the first Tx antenna 306, with no signals being transmitted through the other Tx antennas 308, 310 and 312. For a second time interval, $r_2$ is transmitted through the second Tx antenna 308, with no signals being transmitted through the other Tx antennas 306, 310 and 312. For a third time interval, $r_3$ is transmitted through the third Tx antenna 310, with no signals being transmitted through the other Tx antennas 306, 308, and 312. For a fourth time interval, $r_4$ is transmitted through the fourth Tx antenna 310, with no signals being transmitted through the other Tx antennas 306, 308 and 310.

Upon receipt of the four symbols on a radio channel for the four time intervals, a receiver (not shown) recovers the modulation symbol sequence, d by maximum likelihood (ML) decoding.

Taejin Jung and Kyungwhoon Cheun proposed a pre-coder and concatenated code with an excellent coding gain in 2003, compared to the Giannakis STBC. They enhance the coding gain by concatenating Alamouti STBCs instead of using a diagonal matrix proposed by the Giannakis group. For convenience' sake, their STBC is referred to as "Alamouti FDFR STBC".

The Alamouti FDFR STBC will be described below. FIG. 4 is a block diagram of a transmitter in a mobile communication system using the conventional Alamouti FDFR STBC for four Tx antennas As illustrated in FIG. 4, the transmitter includes a pre-coder 400, a mapper 402, a delay 404, two Alamouti coders 406 and 408, and four Tx antennas 410, 412, 414 and 416.

Referring to FIG. 4, the pre-coder 400 pre-encodes four input modulation symbols, $d_1$, $d_2$, $d_3$, $d_4$ such that signal rotation occurs in a signal space. For the input of a sequence of the four modulation symbols, d, the pre-coder 400 generates a complex vector, r by computing

$$r = \Theta d = \begin{bmatrix} 1 & \alpha_0^1 & \alpha_0^2 & \alpha_0^3 \\ 1 & \alpha_1^1 & \alpha_1^2 & \alpha_1^3 \\ 1 & \alpha_2^1 & \alpha_2^2 & \alpha_2^3 \\ 1 & \alpha_3^1 & \alpha_3^2 & \alpha_3^3 \end{bmatrix} \begin{bmatrix} d_1 \\ d_2 \\ d_3 \\ d_4 \end{bmatrix} = \begin{bmatrix} r_1 \\ r_2 \\ r_3 \\ r_4 \end{bmatrix} \qquad \ldots\ldots(5)$$

where $\alpha_i = exp(j2\pi(i + 1 / 4)/ 4)$, $i = 0,1, 2, 3$.

The mapper 402 groups the four pre-coded symbols by twos and outputs two vectors each including two elements, $[r_1, r_2]^T$ and $[r_3, r_4]^T$ to the Alamouti coder 406 and the delay 404, respectively.

The delay 404 delays the second vector $[r_3, r_4]^T$ for one time interval. Thus, the first vector $[r_1, r_2]^T$ is provided to the Alamouti coder 406 in a first time interval and the second vector $[r_3, r_4]^T$ is provided to the Alamouti coder 408 in a second time interval. The Alamouti coder refers to a coder that operates in the Alamouti STBC scheme.

The Alamouti coder 406 encodes $[r_1, r_2]^T$ so that it is transmitted through the first and second Tx antennas 410 and 412 at first and second time intervals. The Alamouti coder 408 encodes $[r_3, r_4]^T$ so that it is transmitted through the third and fourth Tx antennas 414 and 416 at third and fourth time intervals. A coding matrix used to transmit the four symbols from the mapper 402 through the multiple antennas is

$$S = \begin{bmatrix} r_1 & r_2 & 0 & 0 \\ -r_2^* & r_1^* & 0 & 0 \\ 0 & 0 & r_3 & r_4 \\ 0 & 0 & -r_4^* & r_3^* \end{bmatrix} \qquad \ldots\ldots(6)$$

Unlike the coding matrix illustrated in Equation (4), the coding matrix of Equation (6) is designed to be an Alamouti STBC rather than a diagonal matrix. The use of the Alamouti STBC scheme increases the coding gain.

This Alamouti FDFR STBC, however, has the distinctive shortcoming of increasing coding complexity because the transmitter needs to perform computations between all of the elements of the pre-coding matrix and an input vector, for pre-coding. For example, for four Tx antennas, since 0 is not included in the elements of the pre-coding matrix, computation must be carried out on 16 elements. Also, the receiver needs to perform maximum likelihood (ML) decoding with a large volume of computations in order to decode the signal d transmitted by the transmitter.

Accordingly, a need exists for developing an FDFR STBC technique with a minimal complexity and a minimal computation volume.

**SUMMARY OF THE INVENTION**

An object of the present invention is to substantially solve at least the above problems and/or disadvantages and to provide at least the advantages below. Accordingly, an object of the present invention is to provide an apparatus and method for space-time block coding to achieve a full diversity gain and a full rate in a MIMO mobile communication system.

Another object of the present invention is to provide an apparatus and method for space-time block coding to minimize coding and decoding complexities in a MIMO mobile communication system.

A further object of the present invention is to provide an apparatus and method for space-time block coding to achieve a full diversity gain and a full rate and to decrease coding and decoding complexities in a MIMO mobile communication system.

Still another object of the present invention is to provide an apparatus and method for space-time block coding to achieve a full diversity gain and a full rate and to decrease coding and decoding complexities in a mobile communication system using an even number of Tx antennas.

Yet another object of the present invention is to provide an apparatus and method for space-time block coding for an even number of Tx antennas in a MIMO mobile communication system.

The above objects are achieved by providing a mobile communication system using an STBC scheme with an even number of Tx antennas.

According to one aspect of the present invention, in a transmitter using an even number of ($N_t$) Tx antennas, a pre-coder pre-codes an input symbol sequence using a pre-coding matrix. The pre-coding matrix is a matrix produced by puncturing a unitary matrix in a predetermined method. A space-time coder space-time-encodes the pre-coded symbol sequence received from the pre-coder using a predetermined coding matrix.

According to another aspect of the present invention, in a receiver in a mobile communication system using a space-time coding scheme with an even number of ($N_t$) Tx antennas, a matrix generator multiplies a channel response matrix H by a predetermined pre-coding matrix $\Theta$ and calculates a Hermitian matrix $(H\Theta)^H$ of the product matrix. A signal combiner calculates a vector of size $N_t$ by multiplying a signal received through at least one receive antenna and the Hermitian matrix $(H\Theta)^H$ and divides the vector into two vectors.

According to a further aspect of the present invention, in a transmission method in a transmitter using an even number of ($N_t$) transmit antennas, an input symbol sequence is pre-coded using a pre-coding matrix. The pre-coding matrix is a matrix produced by puncturing a unitary matrix in a predetermined method. The pre-coded symbol sequence is space-time-encoded using a predetermined coding matrix.

According to still another aspect of the present invention, in a reception method in a mobile communication system using a space-time coding scheme with an even number of ($N_t$) transmit antennas, a channel response matrix H is multiplied by a predetermined pre-coding matrix $\Theta$ and a Hermitian matrix $(H\Theta)^H$ of the product matrix is calculated. A vector of size $N_t$ is calculated by multiplying a signal received through at least one receive antenna and the Hermitian matrix $(H\Theta)^H$, and divided into two vectors. Symbols transmitted from a transmitter are estimated by decoding each of the two vectors received from the signal combiner in a predetermined decoding method.

According to yet another aspect of the present invention, in a method of generating a pre-coding matrix in a system where transmission data is pre-coded and then space-time-encoded, a unitary matrix is generated, half of the columns of the unitary matrix are punctured, and the pre-coding matrix is generated by sequentially grouping the rows of the punctured matrix by twos and shifting one row of each group.

**BRIEF DESCRIPTION OF THE DRAWINGS**

The above and other objects, features and advantages of the present invention will become more apparent from the following detailed description when taken in conjunction with the accompanying drawings in which:

FIG. 1 is a block diagram of a transmitter in a mobile communication system using a conventional STBC scheme;
FIG. 2 is a block diagram of a receiver in the mobile communication system using the conventional STBC scheme;
FIG. 3 is a block diagram of a transmitter in a mobile communication system using a Giannakis STBC scheme;
FIG. 4 is a block diagram of a receiver in a mobile communication system using a Alamouti FDFR STBC scheme with four Tx antennas proposed by Taejin Jung and Kyungwhoon Cheun;
FIG. 5 is a block diagram of a transmitter in a MIMO mobile communication system using an STBC scheme for an even number of Tx antennas according to an embodiment of the present invention;
FIG. 6 is a detailed block diagram of a pre-coding matrix generator in a pre-coder according to the embodiment of the present invention;
FIG. 7 is a flowchart illustrating a transmission operation in the transmitter illustrated in FIG. 5;
FIG. 8 is a block diagram of a receiver in the MIMO mobile communication system using the STBC scheme for an even number of Tx antennas according to the embodiment of the present invention; and
FIG. 9 is a flowchart illustrating a reception operation in the receiver illustrated in FIG. 8.

**DETAILED DESCRIPTION OF THE PREFERRED EMBODIMENT**

A preferred embodiment of the present invention will be described herein below with reference to the accompanying drawings. In the following description, well-known functions or constructions are not described in detail since they would obscure the invention in unnecessary detail.

The present invention is an apparatus and method for providing an FDFR STBC with low coding and decoding complexities in a MIMO mobile communication system.

In accordance with the present invention, the FDFR STBC scheme is for an even number of Tx antennas. A transmitter uses four Tx antennas as proposed by Taejin Jung and Kyungwhoon Cheun and is configured similarly to a transmitter using an STBC. That is, the present invention proposes an Alamouti FDFR STBC that can extend the number of Tx antennas to 2N (N>1).

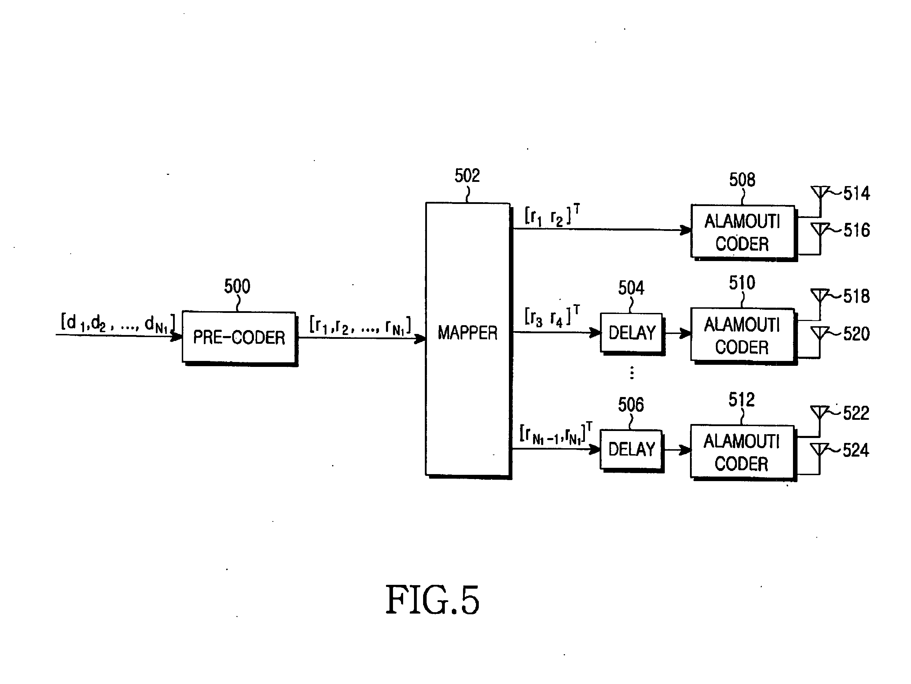

FIG. 5 is a block diagram of a transmitter in a MIMO mobile communication system using an STBC scheme for 2N (N>1) Tx antennas according to an embodiment of the present invention.

As illustrated, the transmitter includes a pre-coder 500, a mapper 502, a plurality of delays 504 to 506, a plurality of Alamouti coders 508 to 512, and 2N (N>1) Tx antennas 514 to 524.

Referring to FIG. 5, information data is typically encoded in a coder and modulated in a modulator. The pre-coder 500 pre-encodes $N_t$ modulation symbols, $[d_1,d_2,...,d_{N_t}]$ such that signal rotation takes place in a signal space and outputs a vector $[r_1,r_2,...,r_{N_t}]$ having $N_t$ symbols. The pre-coder 500 encodes the input symbols in a pre-coding matrix according to the present invention and thus generates a complex vector, r. The pre-coding matrix will be described later in great detail.

The mapper 502 groups the $N_t$ symbols into twos and outputs $N_t/2$ vectors each having two elements, $[r_1,r_2]$, $[r_3,r_4]$, ..., $[r_{N_t-1},r_{N_t}]$. The first vector $[r_1,r_2]^T$ is provided to the Alamouti coder 508 and the other vectors are provided to their respective corresponding delays 504 to 506.

The first delay 504 buffers the second vector $[r_3,r_4]^T$ for one time interval and outputs it to the Alamouti coder 510. The second delay (not shown) buffers $[r_5,r_6]^T$ for two time intervals and outputs it to the third Alamouti coder (not shown). In the same manner, the $(N_t/2-1)^{th}$ delay 506 buffers $[r_{N_t-1},r_{N_t}]^T$ for $(N_t/2-1)$ time intervals and outputs it to the $(N_t/2-1)^{th}$ Alamouti coder 512. Here, an Alamouti coder refers to a coder that encodes in the Alamouti STBC scheme.

The Alamouti coder 508 encodes $[r_1,r_2]^T$ so that it is transmitted through the first and second Tx antennas 514 and 516 for first and second time intervals. The Alamouti coder 510 encodes $[r_3,r_4]^T$ so that it is transmitted through the third and fourth Tx antennas 518 and 520 for third and fourth time intervals. In the same manner, the Alamouti coder 512 encodes $[r_{N_t-1},r_{N_t}]^T$ so that it is transmitted through the $(N_t-1)^{th}$ and $N_t^{th}$ Tx antennas 522 and 524 for $(N_t-1)^{th}$ and $N_t^{th}$ time intervals. A plurality of antenna signals from the Alamouti coders 508 to 512 are provided to their respective corresponding RF processors. The RF processors convert the input data to analog signals and modulate the analog signals to RF signals for transmission over the air through the Tx antennas 514 to 524.

Given $N_t$ Tx antennas, a coding matrix used to transmit the output r of the pre-coder 500 through the multiple antennas is

$$S = \begin{bmatrix} r_1 & r_2 & 0 & 0 & \cdots & 0 \\ -r_2^* & r_1^* & 0 & 0 & \cdots & 0 \\ 0 & 0 & r_3 & r_4 & 0 & 0 \\ 0 & 0 & -r_4^* & r_3^* & 0 & 0 \\ \vdots & \vdots & \ddots & \ddots & \vdots & \vdots \\ 0 & 0 & \cdots & \cdots & r_{N_t-1} & r_{N_t} \\ 0 & 0 & \cdots & \cdots & -r_{N_t}^* & r_{N_t-1}^* \end{bmatrix} \quad \ldots\ldots(7)$$

where an $i^{th}$ row of the matrix S denotes transmission in an $i^{th}$ time interval and a $j^{th}$ column denotes transmission through a $j^{th}$ Tx antenna. Specifically, $r_1$ and $r_2$ are transmitted through the first and second Tx antennas 514 and 516, respectively for a first time interval. $-r_2^*$ and $r_1^*$ are transmitted through the first and second Tx antennas 514 and 516, respectively for a second time interval. In the same manner, $r_{N_t-1}$ and $r_{N_t}$ are transmitted through the $(N_t-1)^{th}$ and $N_t^{th}$

Tx antennas 522 and 524, respectively for an $(N_t-1)^{th}$ time interval. Finally, $-r^*_{N_t}$ and $r^*_{N_t-1}$ are transmitted through the

$(N_t-1)^{th}$ and $N_t^{th}$ Tx antennas 522 and 524, respectively for an $N_t^{th}$ time interval.

The operation of the pre-coder 500 illustrated in FIG. 5 will be described below.

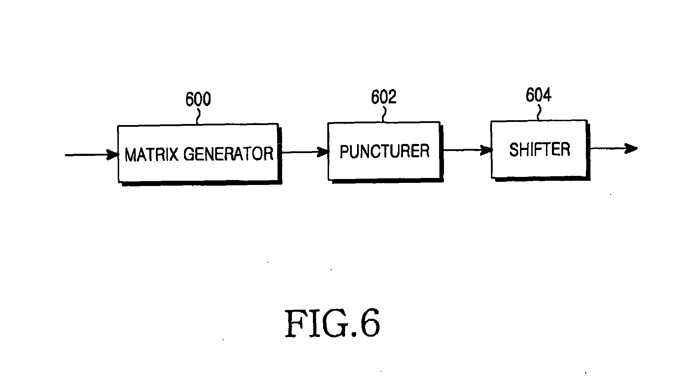

FIG. 6 is a detailed block diagram of a pre-coding matrix generator in the pre-coder 500 according to the embodiment of the present invention.

As illustrated, the pre-coding matrix generator includes a matrix generator 600, a puncturer 602, and a shifter 604.

Referring to FIG. 6, the matrix generator 600 generates a Vandermonde matrix according to the number of the Tx antennas. For $N_t$ Tx antennas, an $N_t \times N_t$ Vandermonde matrix is generated.

The puncturer 602 punctures $\frac{N_t}{2}$ columns in the $N_t \times N_t$ Vandermonde matrix. The puncturing is to substitute 0s for the elements of the $\frac{N_t}{2}$ columns.

The shifter 604 shifts even-numbered rows in the punctured Vandermonde matrix, thereby moving non-punctured elements to the punctured positions. For the same effect, odd-numbered rows can be shifted, or the rows are grouped into twos and one row of each group is shifted.

As described above, the pre-coding matrix is generated by puncturing of $\frac{N_t \times N_t}{2}$ elements in the $N_t \times N_t$ matrix,

thereby greatly reducing coding and decoding complexities (computation volume) according to the present invention. While the pre-coder 500 generates the pre-coding matrix in the above embodiment of the present invention, it can be further contemplated as another embodiment that a preliminarily generated pre-coding matrix is stored in a memory and read for pre-coding by the pre-coder 500 when needed.

The operation of the pre-coding matrix generator is summarized as follows.

(1) Generation of Vandermonde Matrix

An $N_t \times N_t$ Vandermonde matrix as shown below is generated. $N_t$ is the number of Tx antennas, as stated earlier.

$$\Theta = \begin{bmatrix} 1 & \alpha_0^1 & \alpha_0^2 & \cdots & \alpha_0^{N_t-1} \\ 1 & \alpha_1^1 & \alpha_1^2 & \cdots & \alpha_1^{N_t-1} \\ \vdots & \vdots & \ddots & \cdots & \vdots \\ 1 & \alpha_{N_t-1}^1 & \alpha_{N_t-1}^2 & \cdots & \alpha_{N_t-1}^{N_t-1} \end{bmatrix}$$

$$\ldots\ldots (8)$$

where $\alpha_i = exp(j2\pi(i + 1 / 4)/ N_t)$, $i = 0, 1, 2,..., N_t - 1$ .

(2) Puncturing of Vandermonde Matrix

$\frac{N_t \times N_t}{2}$ elements are punctured in the $N_t \times N_t$ Vandermonde matrix by replacing the $\frac{N_t \times N_t}{2}$ elements with 0s. The resulting punctured matrix is

$$\Theta = \begin{bmatrix} 1 & \alpha_0^1 & \cdots & \alpha_0^{N_t/2-1} & 0 & \cdots & 0 \\ 1 & \alpha_1^1 & \cdots & \alpha_1^{N_t/2-1} & 0 & \cdots & 0 \\ \vdots & \vdots & \ddots & \cdots & \cdots & \ddots & \vdots \\ 1 & \alpha_{N_t-1}^1 & \cdots & \alpha_{N_t-1}^{N_t/2-1} & 0 & \cdots & 0 \end{bmatrix}$$

$$\cdots \cdots (9)$$

(3) Shifting of Even-Numbered Rows in Punctured Matrix

A final pre-coding matrix is generated by shifting even-numbered rows in the punctured $N_t$x$N_t$ Vandermonde matrix. The shifting moves non-punctured elements to punctured positions in the even-numbered rows. Thus,

$$\Theta = \begin{bmatrix} 1 & \alpha_0^1 & \cdots & \alpha_0^{N_t/2-1} & 0 & \cdots & 0 \\ 0 & 0 & \cdots & 0 & 1 & \cdots & \alpha_1^{N_t/2-1} \\ \vdots & \vdots & \ddots & \cdots & \cdots & \ddots & \vdots \\ 1 & \alpha_{N_t-2}^1 & \cdots & \alpha_{N_t-2}^{N_t/2-1} & 0 & \cdots & 0 \\ 0 & 0 & \cdots & 0 & 1 & \cdots & \alpha_{N_t-1}^{N_t/2-1} \end{bmatrix}$$

$$\cdots \cdots (10)$$

Even if $\alpha_i$ is set such that $\alpha_0 = \alpha_1$, $\alpha_2 = \alpha_3$, and $\alpha_{N_t-2} = \alpha_{N_t-1}$, there is no change in performance. Instead of the even-numbered rows, the odd-numbered rows can be shifted, resulting in the same effect.
As described above, for $N_t$ Tx antennas, the operation of the pre-coder 500 is implemented by

$$N_t r = \Theta d = \begin{bmatrix} 1 & \alpha_0^1 & \cdots & \alpha_0^{N_t/2-1} & 0 & 0 & \cdots & 0 \\ 0 & 0 & \cdots & 0 & 1 & \alpha_0^1 & \cdots & \alpha_0^{N_t/2-1} \\ \vdots & \vdots & \ddots & \cdots & \cdots & \ddots & \vdots & \vdots \\ 1 & \alpha_{N_t/2-1}^1 & \cdots & \alpha_{N_t/2-1}^{N_t/2-1} & 0 & 0 & \cdots & 0 \\ 0 & 0 & \cdots & 0 & 1 & \alpha_{N_t/2-1}^1 & \cdots & \alpha_{N_t/2-1}^{N_t/2-1} \end{bmatrix} \begin{bmatrix} d_1 \\ d_2 \\ \vdots \\ d_{N_t-1} \\ d_{N_t} \end{bmatrix} = \begin{bmatrix} r_1 \\ r_2 \\ \vdots \\ r_{N_t-1} \\ r_{N_t} \end{bmatrix}$$

$$\cdots \cdots (11)$$

where $[d_1, d_2, ..., d_{N_t-1}, d_{N_t}]$ is an input symbol sequence to the pre-coder 500 and $[r_1, r_2, ..., r_{N_t-1}, r_{N_t}]$ is an output symbol sequence from the pre-coder 500.
The elements of the thus-designed pre-coding matrix $\Theta$ must be optimized to maximize the coding gain. This is done by mathematical computations or simulation.
In accordance with the embodiment of the present invention, pre-coding matrices $\Theta$ with a maximum coding gain are achieved by simulation. These pre-coding matrices are illustrated below.
For an Alamouti FDFR STBC system with four antennas, the following pre-coding matrix $\Theta$ is available.

$$\Theta = \frac{1}{\sqrt{2}} \begin{bmatrix} 1 & e^{-j\theta_o} & 0 & 0 \\ 0 & 0 & 1 & e^{-j\theta_o} \\ 1 & e^{-j\theta_1} & 0 & 0 \\ 0 & 0 & 1 & e^{-j\theta_1} \end{bmatrix}$$

. . . . . (12)

where $0 \le \theta_0$, $\theta_1 \le 2\pi$, and $|\theta_1 - \theta_2| = \mathbf{180°}$.

For an Alamouti FDFR STBC system with six antennas, the following pre-coding matrix $\Theta$ is available.

$$\Theta = \frac{1}{\sqrt{3}} \begin{bmatrix} 1 & e^{-j\frac{5}{9}\pi} & e^{-j\frac{10}{9}\pi} & 0 & 0 & 0 \\ 0 & 0 & 0 & 1 & e^{-j\frac{5}{9}\pi} & e^{-j\frac{10}{9}\pi} \\ 1 & e^{-j\frac{11}{9}\pi} & e^{-j\frac{4}{9}\pi} & 0 & 0 & 0 \\ 0 & 0 & 0 & 1 & e^{-j\frac{11}{9}\pi} & e^{-j\frac{4}{9}\pi} \\ 1 & e^{-j\frac{17}{9}\pi} & e^{-j\frac{16}{9}\pi} & 0 & 0 & 0 \\ 0 & 0 & 0 & 1 & e^{-j\frac{17}{9}\pi} & e^{-j\frac{16}{9}\pi} \end{bmatrix}$$

. . . . . (13)

For an Alamouti FDFR STBC system with eight or more antennas, the following pre-coding matrix $\Theta$ is available.

$$\Theta = \frac{1}{\sqrt{N_t/2}} \begin{bmatrix} 1 & \alpha_0^1 & \cdots & \alpha_0^{N_t/2-1} & 0 & 0 & \cdots & 0 \\ 0 & 0 & \cdots & 0 & 1 & \alpha_0^1 & \cdots & \alpha_0^{N_t/2-1} \\ \vdots & \vdots & \ddots & \cdots & \cdots & \ddots & \vdots & \vdots \\ 1 & \alpha_{N_t/2-1}^1 & \cdots & \alpha_{N_t/2-1}^{N_t/2-1} & 0 & 0 & \cdots & 0 \\ 0 & 0 & \cdots & 0 & 1 & \alpha_{N_t/2-1}^1 & \cdots & \alpha_{N_t/2-1}^{N_t/2-1} \end{bmatrix}$$

. . . . . (14)

$\alpha_i = exp(j2\pi(i+1/4)/N_t)$, $i = 0, 1, 2,..., N_t / 2 - 1$.

Now a description will be made of the operation of the transmitter illustrated in FIG. 5.

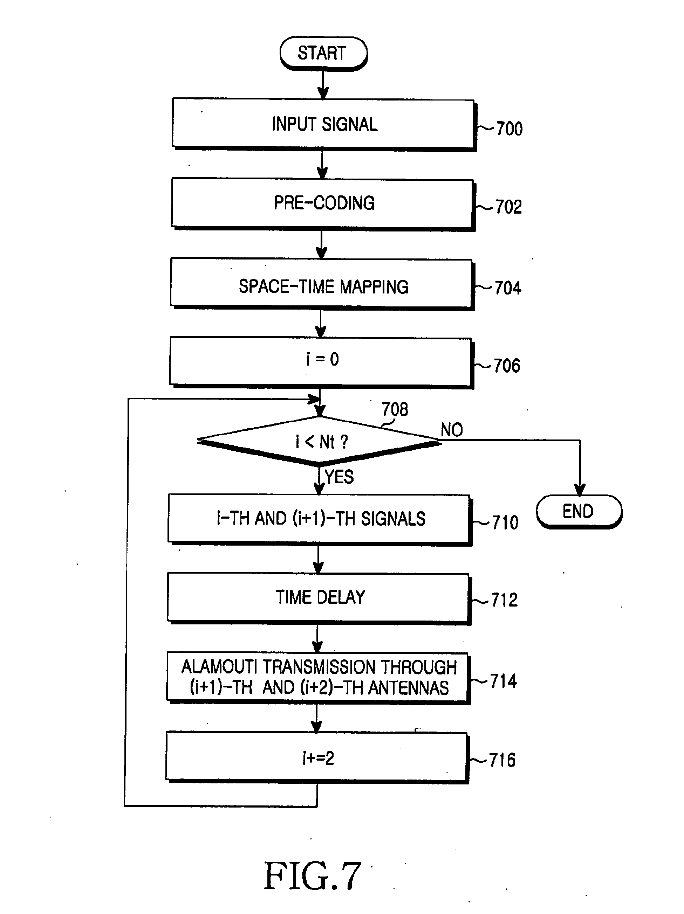

FIG. 7 is a flowchart illustrating the transmitter in the MIMO mobile communication system using the STBC scheme for 2N (N>1) Tx antennas according to the embodiment of the present invention.

Referring to FIG. 7, the transmitter receives a data stream to be transmitted, d ($[d_1,d_2,...,d_{N_t-1},d_{N_t}]$) in step 700. d can be a coded and modulated complex symbol sequence. In step 702, the transmitter generates a pre-coded symbol sequence r ($[r_1,r_2,...,r_{N_t-1},r_{N_t}]$) by encoding the input data stream using a predetermined pre-coding matrix $\Theta$. $\Theta$ is created by puncturing one half of a Vandermonde matrix and shifting rows, as described earlier. Due to the half-puncturing, the pre-coding matrix significantly reduces coding and decoding complexities.

In step 704, the transmitter groups the symbols of the sequence r by twos and performs space-time mapping on the grouped symbols. Specifically, $N_t$ symbols are grouped into $N_t/2$ vectors each having two elements.

The transmitter then sets a time index i to an initial value of 0 in step 706, and compares i with $N_t$ (the number

of Tx antennas) in step 708. If i is less than $N_t$, the transmitter receives a vector having $i^{th}$ and $(i+1)^{th}$ symbols of the pre-coded symbol sequence, r in step 710.

In step 712, the transmitter delays the received vector for $\frac{i}{2}$ time intervals. Therefore, an initial input, that is, the first and second symbols are transmitted through two Tx antennas with no time delay. The following symbols are delayed and then transmitted through corresponding Tx antennas.

After the time delay, the transmitter encodes the received vector with two symbols in the Alamouti STBC scheme and transmits the coded vector through two Tx antennas in step 714. Specifically, a plurality of STBC-coded antenna signals are modulated to RF signals and transmitted through their corresponding antennas.

In step 716, the transmitter increases i by two, and returns to step 708.

If i is equal to or greater than $N_t$ in step 708, the transmitter terminates the algorithm, determining that the transmission data has been completely transmitted.

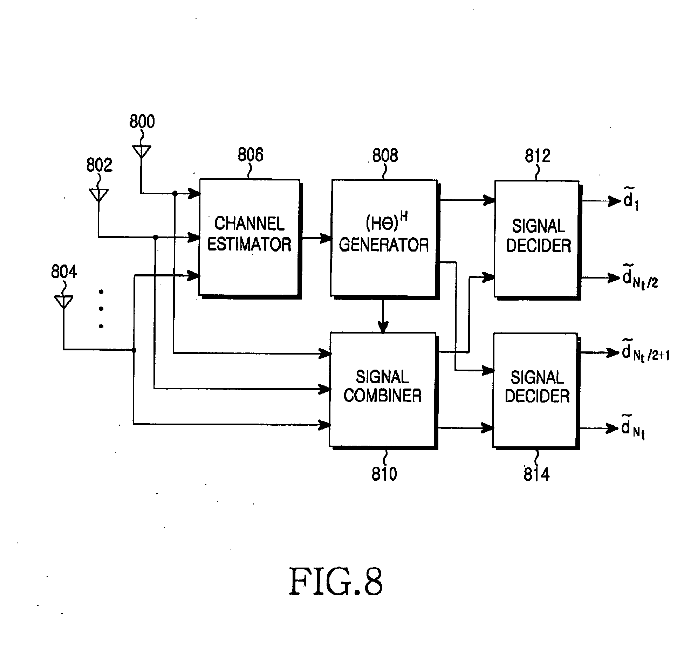

FIG. 8 is a block diagram of a receiver in the MIMO mobile communication system using the STBC scheme for 2N (N>1) Tx antennas according to the embodiment of the present invention. The receiver shown in FIG. 8 is the counter part of the transmitter illustrated in FIG. 5.

As illustrated in FIG. 8, the receiver includes P Rx antennas 800 to 804, a channel estimator 806, a $(H\Theta)^H$ generator 808, a signal combiner 810, and two signal deciders 812 and 814. While the embodiment of the present invention is described under the presumption that the number of Tx antennas in the transmitter is different from that of Rx antennas in the receiver, the number of Tx and Rx antennas can be the same.

Referring to FIG. 8, signals transmitted from the Tx antennas 514 to 524 in FIG. 5 in the transmitter arrive at the first to $P^{th}$ Rx antennas 800 to 804. Typically, the received signals are downconverted to baseband signals by an RF processor and provided to the channel estimator 806 and the signal combiner 810.

The channel estimator 806 estimates channel coefficients representing channel gains from the received signals. The $(H\Theta)^H$ generator 808 constructs a channel response matrix H with the channel coefficients and calculates a Hermitian matrix $(H\Theta)^H$ by multiplying the channel response matrix H by a known pre-coding matrix $\Theta$.

The signal combiner 810 generates a received symbol sequence by multiplying the signals received from the first to $P^{th}$ Rx antennas 800 to 804 by the Hermitian matrix $(H\Theta)^H$. First to $(N_t/2)^{th}$ symbols in the symbol sequence are provided to the first signal decider 812, and $(N_t/2+1)^{th}$ to $N_t^{th}$ symbols are provided to the second signal decider 814.

The signal decider 812 estimates symbols transmitted by the transmitter by performing, for example, ML decoding on the vector of size $\frac{N_t}{2}$ received from the signal combiner 810 and outputs the estimated symbols, $\tilde{d}_1, \tilde{d}_2, ..., \tilde{d}_{N_t/2}$. The signal decider 814 estimates symbols transmitted by the transmitter by performing, for example, ML decoding on the vector of size $\frac{N_t}{2}$ received from the signal combiner 810 and outputs the estimated symbols, $\tilde{d}_{N_t/2+1}, \tilde{d}_{N_t/2+2}, ..., \tilde{d}_{N_t}$. The operation of the signal deciders 812 and 814 are implemented by Equation (17). The estimated symbols are demodulated in a demodulator and recovered to the original information data in a decoder.

The ML decoding for size $\frac{N_t}{2}$ considerably reduces computation volume, compared to an existing ML decoding for size $N_t$.

The operation of the receiver is summarized in mathematical terms as follows.

For one Rx antenna for example, the received signal is

$$y = Hr = H\Theta d + n \qquad (15)$$

where $y = [y_1\ y^*_2 ... y_{N_t-1}\ y^*_{N_t}]^T$. That is, y is a vector that includes signals received for $N_t$ time intervals, $y_1, y_2, ... y_{N_t-1}, y_{N_t}$ and their conjugates. Thus, the vector y is multiplied by $(H\Theta)^H$ to estimate a signal transmitted from the transmitter, $d = [d_1, d_2, ..., d_{N_t-1}, d_{N_t}]^T$. This operation is expressed as

$$y' = (H\Theta)^H \, y = (H\Theta)^H \, H\Theta d + (H\Theta)^H \, n$$

$$= \begin{bmatrix} A & 0 \\ 0 & A \end{bmatrix} \begin{bmatrix} d_1 \\ d_2 \\ \vdots \\ d_{N_t-1} \\ d_{N_t} \end{bmatrix} + (H\Theta)^H \begin{bmatrix} n'_1 \\ n'_2 \\ n'_3 \\ \vdots \\ n'_{N_t-1} \\ n'_{N_t} \end{bmatrix}$$

$$\ldots \ldots (16)$$

where A denotes a $\frac{N_t}{2} \times \frac{N_t}{2}$ matrix.

Equation (16) reveals that the resulting vector can be divided into two vectors of size $\frac{N_t}{2}$, $(d_1,d_2,...,d_{N_t/2})$ and $(d_{N_t/2+1},d_{N_t/2+2},...,d_{N_t})$, and ML decoding can be performed on each of the two vectors.

The signal transmitted by the transmitter is determined by

$$\widetilde{d}_{1,2,...,N_t/2} = arg\,^{min}_{d_{1,2,...,N_t/2}} \left\| y'_{1,2,...,N_t/2} - A d_{1,2,...,N_t/2} \right\|^2$$

$$\widetilde{d}_{N_t/2+1,...,N_t} = arg\,^{min}_{d_{N_t/2+1,...,N_t}} \left\| y'_{N_t/2+1,...,N_t} - A d_{N_t/2+1,...,N_t} \right\|^2$$

$$\ldots \ldots (17)$$

where $\widetilde{d}_{1,2,...,N_t/2} = [\widetilde{d}_1,...,\widetilde{d}_{N_t/2}]$, $\widetilde{d}_{N_t/2+1,...,N} = [\widetilde{d}_{N_t/2+},...,\widetilde{d}_{N_t}]$, $d_{1,2,...,N_t/2} = [d_1,...,d_{N_t/2}]$, $d_{N_t/2+1,...,N_t} = [d_{N_t/2+1},...,d_{N_t}]$, $y'_{1,2,...,N_t/2} = [y'_1,...,y'_{N_t/2}]$, and $y'_{N_t/2+1,...,N_t} = [y'_{N_t/2+1},...,y'_{N_t}]$. That is, for an even number of ($N_t$) Tx antennas, Alamouti FDFR STBC decoding is carried out by ML-decoding vectors each having $\frac{N_t}{2}$ elements.

The operation of the receiver illustrated in FIG. 8 will be described below.

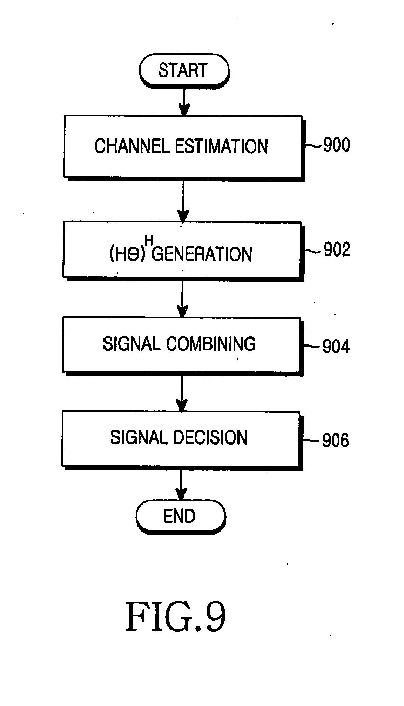

FIG. 9 is a flowchart illustrating a reception operation in the receiver in the MIMO mobile communication system using the STBC scheme for 2N (N>1) Tx antennas according to the embodiment of the present invention.

Referring to FIG. 9, the receiver calculates channel coefficients representing channel gains between the transmitter and the receiver using a signal y received through the Rx antennas in step 900.

In step 902, the receiver generates a channel response matrix H using the estimated channel coefficients and produces a Hermitian matrix, $(H\Theta)^H$ by multiplying the channel response matrix H by the pre-coding matrix $\Theta$.

The receiver generates a vector having $N_t$ elements by multiplying the Hermitian matrix $(H\Theta)^H$ by the received signal y in step 904. In step 906, the receiver divides the vector into two vectors and ML-decodes each of the two vectors, thereby deciding symbols transmitted from the transmitter. These symbols are recovered to the original information data through demodulation and decoding.

In a comparison between a conventional STBC scheme and the STBC scheme of the present invention in terms of decoding complexity, for $2^m$ complex signals, a pre-coder in the Alamouti FDFR STBC of Taejin Jung and Kyungwhoon Cheun has a decoding complexity of $(2^m)^4$, while the pre-coder of the present invention has a far less decoding complexity of $2 \times (2^m)^2$.

For 16QAM, for instance, the decoding complexity is $C_{old}=(2^4)^4=2^{16}$ in the conventional pre-coder and $C_{new}=2(2^4)^2=2^9$ in the pre-coder of the present invention. Thus, $\frac{C_{new}}{C_{old}} = 0.0078$, which implies that the present invention considerably decreases computation volume.

It is concluded that compared to the Alamouti FDFR STBC scheme, the inventive STBC scheme achieves almost the same performance and yet minimizes the computation volume and complexity.

As described above, the efficient STBC coding and decoding algorithms of the present invention enable the implementation of a high-reliability communication system. Compared to the conventional FDFR STBC scheme using a pre-coder, the STBC scheme of the present invention greatly reduces decoding complexity, ensuring excellent performance.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A transmitter having an even number of ($N_t$) transmit antennas, comprising:

   a pre-coder for pre-coding an input symbol sequence using a pre-coding matrix, the pre-coding matrix produced by puncturing a unitary matrix; and
   a space-time coder for space-time-encoding the pre-coded symbol sequence received from the pre-coder using a coding matrix.

2. The transmitter of claim 1, wherein the space-time coder comprises:

   a mapper for generating a plurality of vectors by grouping the symbols of the pre-coded symbol sequence by twos; and
   a plurality of coders for encoding each of the vectors in an Alamouti coding scheme and transmitting each of the coded vectors through two antennas.

3. The transmitter of claim 2, wherein an $i^{th}$ coder from among the plurality of coders encodes an $i^{th}$ vector in the Alamouti coding scheme and transmits the coded vector through two antennas for $(2i-1)^{th}$ and $2i^{th}$ time intervals, where i=1, 2, 3, ..., $\frac{N_t}{2}$.

4. The transmitter of claim 1, wherein the coding matrix is

$$S = \begin{bmatrix} r_1 & r_2 & 0 & 0 & \cdots & 0 \\ -r_2^* & r_1^* & 0 & 0 & \cdots & 0 \\ 0 & 0 & r_3 & r_4 & 0 & 0 \\ 0 & 0 & -r_4^* & r_3^* & 0 & 0 \\ \vdots & \vdots & \ddots & \ddots & \vdots & \vdots \\ 0 & 0 & \cdots & \cdots & r_{N_t-1} & r_{N_t} \\ 0 & 0 & \cdots & \cdots & -r_{N_t}^* & r_{N_t-1}^* \end{bmatrix}$$

where $r_1,r_2,...,r_{N_t}$ is a symbol sequence output from the pre-coder, an $i^{th}$ row in the matrix S denotes transmission in an $i^{th}$ time interval, and a $j^{th}$ column denotes transmission through a $j^{th}$ Tx antenna.

5. The transmitter of claim 1, wherein the pre-coding matrix is produced by puncturing $\frac{N_t}{2}$ columns in an $N_t$x$N_t$ Vandermonde matrix, sequentially grouping the rows of the punctured matrix by twos, and shifting one row of each group.

6. The transmitter of claim 1, wherein if the number of transmit antennas is 4 ($N_t$=4), the pre-coding matrix is

$$\Theta = \frac{1}{\sqrt{2}}\begin{bmatrix} 1 & e^{-j\theta_0} & 0 & 0 \\ 0 & 0 & 1 & e^{-j\theta_0} \\ 1 & e^{-j\theta_1} & 0 & 0 \\ 0 & 0 & 1 & e^{-j\theta_1} \end{bmatrix}$$

where $0 \le \theta_0$, $\theta_1 \le 2\pi$ , and $|\theta_1 - \theta_2| = \mathbf{180°}$.

**7.** The transmitter of claim 1, wherein if the number of transmit antennas is 6 ($N_t$=6), the pre-coding matrix is

$$\Theta = \frac{1}{\sqrt{3}}\begin{bmatrix} 1 & e^{-j\frac{5}{9}\pi} & e^{-j\frac{10}{9}\pi} & 0 & 0 & 0 \\ 0 & 0 & 0 & 1 & e^{-j\frac{5}{9}\pi} & e^{-j\frac{10}{9}\pi} \\ 1 & e^{-j\frac{11}{9}\pi} & e^{-j\frac{4}{9}\pi} & 0 & 0 & 0 \\ 0 & 0 & 0 & 1 & e^{-j\frac{11}{9}\pi} & e^{-j\frac{4}{9}\pi} \\ 1 & e^{-j\frac{17}{9}\pi} & e^{-j\frac{16}{9}\pi} & 0 & 0 & 0 \\ 0 & 0 & 0 & 1 & e^{-j\frac{17}{9}\pi} & e^{-j\frac{16}{9}\pi} \end{bmatrix}$$

**8.** The transmitter of claim 1, wherein for the even number of transmit antennas ($N_t$=even number), the pre-coding matrix is

$$\Theta = \frac{1}{\sqrt{N_t/2}}\begin{bmatrix} 1 & \alpha_0^1 & \cdots & \alpha_0^{N_t/2-1} & 0 & 0 & \cdots & 0 \\ 0 & 0 & \cdots & 0 & 1 & \alpha_0^1 & \cdots & \alpha_0^{N_t/2-1} \\ \vdots & \vdots & \ddots & \cdots & \cdots & \ddots & \vdots & \vdots \\ 1 & \alpha_{N_t-2}^1 & \cdots & \alpha_{N_t-2}^{N_t/2-1} & 0 & 0 & \cdots & 0 \\ 0 & 0 & \cdots & 0 & 1 & \alpha_{N_t-2}^1 & \cdots & \alpha_{N_t-2}^{N_t/2-1} \end{bmatrix}$$

where $\alpha_i = exp(j2\pi(i+1/4)/N_t)$, $i = 0, 1, 2,..., N_t/2 - 1$ .

**9.** The transmitter of claim 1, further comprising:

    a coder for encoding transmission data;
    a modulator for modulating the coded symbols received from the coder and providing the modulated symbols to the pre-coder; and
    a radio frequency (RF) modulator for modulating the plurality of antenna signals received form the space-time coder to RF signals and outputting the RF signals to antennas.

**10.** A pre-coding matrix generator in a system where transmission data is pre-coded and then space-time-encoded, comprising:

    a matrix generator for generating a unitary matrix;
    a puncturer for puncturing half the columns of the unitary matrix; and
    a shifter for generating a pre-coding matrix by sequentially grouping the rows of the punctured matrix by twos and shifting one row of each group.

**11.** The pre-coding matrix generator of claim 10, wherein the unitary matrix is a Vandermonde matrix.

**12.** The pre-coding matrix generator of claim 10, wherein for four transmit antennas, the pre-coding matrix is

$$\Theta = \frac{1}{\sqrt{2}} \begin{bmatrix} 1 & e^{-j\theta_o} & 0 & 0 \\ 0 & 0 & 1 & e^{-j\theta_o} \\ 1 & e^{-j\theta_1} & 0 & 0 \\ 0 & 0 & 1 & e^{-j\theta_1} \end{bmatrix}$$

where $0 \le \theta_0, \theta_1 \le 2\pi$, and $|\theta_1 - \theta_2| = 180°$.

**13.** The apparatus of claim 10, wherein for six transmit antennas, the pre-coding matrix is

$$\Theta = \frac{1}{\sqrt{3}} \begin{bmatrix} 1 & e^{-j\frac{5}{9}\pi} & e^{-j\frac{10}{9}\pi} & 0 & 0 & 0 \\ 0 & 0 & 0 & 1 & e^{-j\frac{5}{9}\pi} & e^{-j\frac{10}{9}\pi} \\ 1 & e^{-j\frac{11}{9}\pi} & e^{-j\frac{4}{9}\pi} & 0 & 0 & 0 \\ 0 & 0 & 0 & 1 & e^{-j\frac{11}{9}\pi} & e^{-j\frac{4}{9}\pi} \\ 1 & e^{-j\frac{17}{9}\pi} & e^{-j\frac{16}{9}\pi} & 0 & 0 & 0 \\ 0 & 0 & 0 & 1 & e^{-j\frac{17}{9}\pi} & e^{-j\frac{16}{9}\pi} \end{bmatrix}$$

**14.** The apparatus of claim 10, wherein for $N_t$ transmit antennas, the pre-coding matrix is

$$\Theta = \frac{1}{\sqrt{N_t/2}} \begin{bmatrix} 1 & \alpha_0^1 & \cdots & \alpha_0^{N_t/2-1} & 0 & 0 & \cdots & 0 \\ 0 & 0 & \cdots & 0 & 1 & \alpha_0^1 & \cdots & \alpha_0^{N_t/2-1} \\ \vdots & \vdots & \ddots & \cdots & \cdots & \ddots & \vdots & \vdots \\ 1 & \alpha_{N_t-2}^1 & \cdots & \alpha_{N_t-2}^{N_t/2-1} & 0 & 0 & \cdots & 0 \\ 0 & 0 & \cdots & 0 & 1 & \alpha_{N_t-2}^1 & \cdots & \alpha_{N_t-2}^{N_t/2-1} \end{bmatrix}$$

where $\alpha_i = exp(j2\pi(i + 1 / 4)/ N_t)$, $i = 0, 1, 2,..., N_t / 2 - 1$.

**15.** A receiver in a mobile communication system using a space-time coding scheme with an even number of ($N_t$) transmit antennas, comprising:

a matrix generator for multiplying a channel response matrix H by a pre-coding matrix $\Theta$ and calculating a Hermitian matrix $(H\Theta)^H$ of the product matrix; and
a signal combiner for calculating a vector of size $N_t$ by multiplying a signal received through at least one receive antenna and the Hermitian matrix $(H\Theta)^H$, and dividing the vector into two vectors.

**16.** The receiver of claim 15, further comprising a signal decider for estimating symbols transmitted from a transmitter by decoding each of the two vectors received from the signal combiner according to a decoding method.

**17.** The receiver of claim 15, wherein the decoding method is maximum likelihood (ML) decoding.

**18.** The receiver of claim 15, wherein the pre-coding matrix is produced by puncturing $\frac{N_t}{2}$ columns in an $N_t$x$N_t$ Vander-monde matrix, sequentially grouping the rows of the punctured matrix by twos, and shifting one row of each group.

**19.** The receiver of claim 15, wherein if the number of transmit antennas is 4 ($N_t$=4), the pre-coding matrix is

$$\Theta = \frac{1}{\sqrt{2}} \begin{bmatrix} 1 & e^{-j\theta_0} & 0 & 0 \\ 0 & 0 & 1 & e^{-j\theta_0} \\ 1 & e^{-j\theta_1} & 0 & 0 \\ 0 & 0 & 1 & e^{-j\theta_1} \end{bmatrix}$$

where $0 \leq \theta_0$, $\theta_1 \leq 2\pi$, and $|\theta_1 - \theta_2| = \boldsymbol{180°}$.

**20.** The receiver of claim 15, wherein if the number of transmit antennas is 6 ($N_t$=6), the pre-coding matrix is

$$\Theta = \frac{1}{\sqrt{3}} \begin{bmatrix} 1 & e^{-j\frac{5}{9}\pi} & e^{-j\frac{10}{9}\pi} & 0 & 0 & 0 \\ 0 & 0 & 0 & 1 & e^{-j\frac{5}{9}\pi} & e^{-j\frac{10}{9}\pi} \\ 1 & e^{-j\frac{11}{9}\pi} & e^{-j\frac{4}{9}\pi} & 0 & 0 & 0 \\ 0 & 0 & 0 & 1 & e^{-j\frac{11}{9}\pi} & e^{-j\frac{4}{9}\pi} \\ 1 & e^{-j\frac{17}{9}\pi} & e^{-j\frac{16}{9}\pi} & 0 & 0 & 0 \\ 0 & 0 & 0 & 1 & e^{-j\frac{17}{9}\pi} & e^{-j\frac{16}{9}\pi} \end{bmatrix}$$

**21.** The receiver of claim 15, wherein for an even number of transmit antennas ($N_t$=even number), the pre-coding matrix is

$$\Theta = \frac{1}{\sqrt{N_t/2}} \begin{bmatrix} 1 & \alpha_0^1 & \cdots & \alpha_0^{N_t/2-1} & 0 & 0 & \cdots & 0 \\ 0 & 0 & \cdots & 0 & 1 & \alpha_0^1 & \cdots & \alpha_0^{N_t/2-1} \\ \vdots & \vdots & \ddots & \cdots & \cdots & \ddots & \vdots & \vdots \\ 1 & \alpha_{N_t-2}^1 & \cdots & \alpha_{N_t-2}^{N_t/2-1} & 0 & 0 & \cdots & 0 \\ 0 & 0 & \cdots & 0 & 1 & \alpha_{N_t-2}^1 & \cdots & \alpha_{N_t-2}^{N_t/2-1} \end{bmatrix}$$

where $\alpha_i = exp(j2\pi(i+1/4)/N_t)$, $i = 0, 1, 2,..., N_t/2-1$.

**22.** The receiver of claim 16, further comprising:

a radio frequency (RF) processor for downconverting the signal received through the at least one receive antenna to a baseband signal and providing the baseband signal to a channel estimator and the signal combiner;
the channel estimator for calculating the channel response matrix H using the baseband signal;
a demodulator for demodulating the estimated symbols received from the signal decider; and
a decoder for decoding the demodulated symbols received form the demodulator.

**23.** A transmission method in a transmitter using an even number of ($N_t$) transmit antennas, comprising the steps of:

pre-coding an input symbol sequence using a pre-coding matrix, the pre-coding matrix being produced by puncturing a unitary matrix; and
space-time-encoding the pre-coded symbol sequence using a coding matrix.

**24.** The transmission method of claim 23, wherein the space-time-encoding step comprises the steps of:

generating a plurality of vectors by grouping the symbols of the pre-coded symbol sequence by twos; and encoding each of the vectors in an Alamouti coding scheme and transmitting each of the coded vectors through two antennas.

**25.** The transmission method of claim 24, wherein the encoding and transmitting step comprises the step of encoding an $i^{th}$ vector from among the plurality of vectors in the Alamouti coding scheme and transmitting the coded vector through two antennas for $(2i-1)^{th}$ and $2i^{th}$ time intervals, where i=1, 2, 3, . . ., $\frac{N_t}{2}$.

**26.** The transmission method of claim 23, wherein the coding matrix is given by is

$$
S = \begin{bmatrix}
r_1 & r_2 & 0 & 0 & \cdots & 0 \\
-r_2^* & r_1^* & 0 & 0 & \cdots & 0 \\
0 & 0 & r_3 & r_4 & 0 & 0 \\
0 & 0 & -r_4^* & r_3^* & 0 & 0 \\
\vdots & \vdots & \ddots & \ddots & \vdots & \vdots \\
0 & 0 & \cdots & \cdots & r_{N_t-1} & r_{N_t} \\
0 & 0 & \cdots & \cdots & -r_{N_t}^* & r_{N_t-1}^*
\end{bmatrix}
$$

where $r_1, r_2, ..., r_{N_t}$ is a pre-coded symbol sequence, an $i^{th}$ row in the matrix S denotes transmission in an $i^{th}$ time interval, and a $j^{th}$ column denotes transmission through a $j^{th}$ Tx antenna.

**27.** The transmission method of claim 23, wherein the pre-coding matrix is produced by puncturing $\frac{N_t}{2}$ columns in an $N_t \times N_t$ Vandermonde matrix, sequentially grouping the rows of the punctured matrix by twos, and shifting one row of each group.

**28.** The transmission method of claim 23, wherein if the number of transmit antennas is 4 ($N_t$=4), the pre-coding matrix is

$$
\Theta = \frac{1}{\sqrt{2}} \begin{bmatrix}
1 & e^{-j\theta_0} & 0 & 0 \\
0 & 0 & 1 & e^{-j\theta_0} \\
1 & e^{-j\theta_1} & 0 & 0 \\
0 & 0 & 1 & e^{-j\theta_1}
\end{bmatrix}
$$

where $0 \le \theta_0, \theta_1 \le 2\pi$, and $|\theta_1 - \theta_2| = 180°$.

**29.** The transmission method of claim 23, wherein if the number of transmit antennas is 6 ($N_t$=6), the pre-coding matrix is

$$\Theta = \frac{1}{\sqrt{3}} \begin{bmatrix} 1 & e^{-j\frac{5}{9}\pi} & e^{-j\frac{10}{9}\pi} & 0 & 0 & 0 \\ 0 & 0 & 0 & 1 & e^{-j\frac{5}{9}\pi} & e^{-j\frac{10}{9}\pi} \\ 1 & e^{-j\frac{11}{9}\pi} & e^{-j\frac{4}{9}\pi} & 0 & 0 & 0 \\ 0 & 0 & 0 & 1 & e^{-j\frac{11}{9}\pi} & e^{-j\frac{4}{9}\pi} \\ 1 & e^{-j\frac{17}{9}\pi} & e^{-j\frac{16}{9}\pi} & 0 & 0 & 0 \\ 0 & 0 & 0 & 1 & e^{-j\frac{17}{9}\pi} & e^{-j\frac{16}{9}\pi} \end{bmatrix}$$

**30.** The transmission method of claim 23, wherein for an even number of transmit antennas ($N_t$=even number), the pre-coding matrix is

$$\Theta = \frac{1}{\sqrt{N_t/2}} \begin{bmatrix} 1 & \alpha_0^1 & \cdots & \alpha_0^{N_t/2-1} & 0 & 0 & \cdots & 0 \\ 0 & 0 & \cdots & 0 & 1 & \alpha_0^1 & \cdots & \alpha_0^{N_t/2-1} \\ \vdots & \vdots & \ddots & \cdots & \cdots & \ddots & \vdots & \vdots \\ 1 & \alpha_{N_t-2}^1 & \cdots & \alpha_{N_t-2}^{N_t/2-1} & 0 & 0 & \cdots & 0 \\ 0 & 0 & \cdots & 0 & 1 & \alpha_{N_t-2}^1 & \cdots & \alpha_{N_t-2}^{N_t/2-1} \end{bmatrix}$$

where $\alpha_i = exp(j2\pi(i + 1/4)/ N_t)$, $i = 0, 1, 2,..., N_t/2 - 1$.

**31.** The transmission method of claim 23, further comprising the steps of:

generating coded symbols by encoding transmission data;
modulating the coded symbols and providing the modulated symbols for pre-coding; and
modulating a plurality of antenna signals generated by space-time encoding to radio frequency (RF) signals
and transmitting the RF signals.

**32.** A method of generating a pre-coding matrix in a system where transmission data is pre-coded and then space-time-encoded, comprising the steps of:

generating a unitary matrix;
puncturing half the columns of the unitary matrix; and
generating the pre-coding matrix by sequentially grouping the rows of the punctured matrix by twos and shifting one row of each group.

**33.** The method of claim 32, wherein the unitary matrix is a Vandermonde matrix.

**34.** The method of claim 32, wherein for four transmit antennas, the pre-coding matrix is

$$\Theta = \frac{1}{\sqrt{2}} \begin{bmatrix} 1 & e^{-j\theta_0} & 0 & 0 \\ 0 & 0 & 1 & e^{-j\theta_0} \\ 1 & e^{-j\theta_1} & 0 & 0 \\ 0 & 0 & 1 & e^{-j\theta_1} \end{bmatrix}$$

where $0 \le \theta_0, \theta_1 \le 2\pi$, and $|\theta_1 - \theta_2| = 180°$.

**35.** The method of claim 32, wherein for six transmit antennas, the pre-coding matrix is

$$\Theta = \frac{1}{\sqrt{3}}\begin{bmatrix} 1 & e^{-j\frac{5}{9}\pi} & e^{-j\frac{10}{9}\pi} & 0 & 0 & 0 \\ 0 & 0 & 0 & 1 & e^{-j\frac{5}{9}\pi} & e^{-j\frac{10}{9}\pi} \\ 1 & e^{-j\frac{11}{9}\pi} & e^{-j\frac{4}{9}\pi} & 0 & 0 & 0 \\ 0 & 0 & 0 & 1 & e^{-j\frac{11}{9}\pi} & e^{-j\frac{4}{9}\pi} \\ 1 & e^{-j\frac{17}{9}\pi} & e^{-j\frac{16}{9}\pi} & 0 & 0 & 0 \\ 0 & 0 & 0 & 1 & e^{-j\frac{17}{9}\pi} & e^{-j\frac{16}{9}\pi} \end{bmatrix}$$

**36.** The method of claim 32, wherein for $N_t$ transmit antennas, the pre-coding matrix is

$$\Theta = \frac{1}{\sqrt{N_t/2}}\begin{bmatrix} 1 & \alpha_0^1 & \cdots & \alpha_0^{N_t/2-1} & 0 & 0 & \cdots & 0 \\ 0 & 0 & \cdots & 0 & 1 & \alpha_0^1 & \cdots & \alpha_0^{N_t/2-1} \\ \vdots & \vdots & \ddots & \cdots & \cdots & \ddots & \vdots & \vdots \\ 1 & \alpha_{N_t-2}^1 & \cdots & \alpha_{N_t-2}^{N_t/2-1} & 0 & 0 & \cdots & 0 \\ 0 & 0 & \cdots & 0 & 1 & \alpha_{N_t-2}^1 & \cdots & \alpha_{N_t-2}^{N_t/2-1} \end{bmatrix}$$

where $a_i = exp(j2\pi(i + 1/4)/N_t)$, $i = 0, 1, 2,...,N_t/2 - 1$.

**37.** A reception method in a mobile communication system using a space-time coding scheme with an even number of ($N_t$) transmit antennas, comprising the steps of:

multiplying a channel response matrix H by a pre-coding matrix $\Theta$ and calculating a Hermitian matrix $(H\Theta)^H$ of the product matrix;
calculating a vector of size $N_t$ by multiplying a signal received through at least one receive antenna and the Hermitian matrix $(H\Theta)^H$ and dividing the vector into two vectors; and
estimating symbols transmitted from a transmitter by decoding each of the two vectors received from the signal combiner according to a decoding method.

**38.** The reception method of claim 37, wherein the decoding method is maximum likelihood (ML) decoding.

**39.** The reception method of claim 37, wherein the pre-coding matrix is produced by puncturing $\frac{N_t}{2}$ columns in an $N_t \times N_t$ Vandermonde matrix, sequentially grouping the rows of the punctured matrix by twos, and shifting one row of each group.

**40.** The reception method of claim 37, wherein if the number of transmit antennas is 4 ($N_t$=4), the pre-coding matrix is

$$\Theta = \frac{1}{\sqrt{2}}\begin{bmatrix} 1 & e^{-j\theta_0} & 0 & 0 \\ 0 & 0 & 1 & e^{-j\theta_0} \\ 1 & e^{-j\theta_1} & 0 & 0 \\ 0 & 0 & 1 & e^{-j\theta_1} \end{bmatrix}$$

where $0 \leq \theta_0, \theta_1 \leq 2\pi$ , and $|\theta_1 - \theta_2| = \mathbf{180°}$.

**41.** The reception method of claim 37, wherein if the number of transmit antennas is 6 ($N_t$=6), the pre-coding matrix is

$$
\Theta = \frac{1}{\sqrt{3}}
\begin{bmatrix}
1 & e^{-j\frac{5}{9}\pi} & e^{-j\frac{10}{9}\pi} & 0 & 0 & 0 \\
0 & 0 & 0 & 1 & e^{-j\frac{5}{9}\pi} & e^{-j\frac{10}{9}\pi} \\
1 & e^{-j\frac{11}{9}\pi} & e^{-j\frac{4}{9}\pi} & 0 & 0 & 0 \\
0 & 0 & 0 & 1 & e^{-j\frac{11}{9}\pi} & e^{-j\frac{4}{9}\pi} \\
1 & e^{-j\frac{17}{9}\pi} & e^{-j\frac{16}{9}\pi} & 0 & 0 & 0 \\
0 & 0 & 0 & 1 & e^{-j\frac{17}{9}\pi} & e^{-j\frac{16}{9}\pi}
\end{bmatrix}
$$

**42.** The reception method of claim 37, wherein for an even number of transmit antennas ($N_t$=even number), the pre-coding matrix is

$$
\Theta = \frac{1}{\sqrt{N_t/2}}
\begin{bmatrix}
1 & \alpha_0^1 & \cdots & \alpha_0^{N_t/2-1} & 0 & 0 & \cdots & 0 \\
0 & 0 & \cdots & 0 & 1 & \alpha_0^1 & \cdots & \alpha_0^{N_t/2-1} \\
\vdots & \vdots & \ddots & \cdots & \cdots & \ddots & \vdots & \vdots \\
1 & \alpha_{N_t-2}^1 & \cdots & \alpha_{N_t-2}^{N_t/2-1} & 0 & 0 & \cdots & 0 \\
0 & 0 & \cdots & 0 & 1 & \alpha_{N_t-2}^1 & \cdots & \alpha_{N_t-2}^{N_t/2-1}
\end{bmatrix}
$$

where $\alpha_i = exp(j2\pi(i + 1/4)/N_t)$, $i = 0, 1, 2,..., N_t/2 - 1$ .

**43.** The reception method of claim 37, further comprising the steps of:

calculating the channel response matrix, H using the signal received through the at least one antenna;
demodulating the estimated symbols; and
recovering original information data by decoding the demodulated symbols.

EP 1 610 487 A2

FIG.1

PRIOR ART

FIG.2

PRIOR ART

300
MODULATOR

302
PRE-CODER

304
SPACE-TIME MAPPER

Tx. ANT 1
Tx. ANT 2
Tx. ANT 3
Tx. ANT 4

306
308
310
312

# FIG.3

# PRIOR ART

400
PRE-CODER

402
MAPPER

$[r_1\ r_2]^T$

406
ALAMOUTI CODER

Tx. ANT 1
Tx. ANT 2

410
412

$[r_3\ r_4]^T$

404
DELAY

408
ALAMOUTI CODER

Tx. ANT 3
Tx. ANT 4

414
416

# FIG.4

# PRIOR ART

FIG.5

600                    602                    604

→ MATRIX GENERATOR → PUNCTURER → SHIFTER →

# FIG.6

**FIG.7**

FIG.8

START

CHANNEL ESTIMATION ~900

$(H\Theta)^H$ GENERATION ~902

SIGNAL COMBINING ~904

SIGNAL DECISION ~906

END

FIG.9